# EUROPÄISCHE PATENTSCHRIFT

(11) **EP 3 037 626 B1**
(45) Veröffentlichungstag und Bekanntmachung des Hinweises auf die Patenterteilung: **22.01.2020**
(21) Anmeldenummer: 15186035.0
(22) Anmeldetag: 21.09.2015
(51) Int. Cl.: F01D 11/00, F16J 15/3288

(54) **DICHTUNGSVORRICHTUNG EINER VERDICHTERANTRIEBSTURBINE**
SEALING DEVICE OF A COMPRESSOR DRIVE TURBINE
DISPOSITIF D'ÉTANCHÉITÉ D'UNE TURBINE D'ENTRAÎNEMENT DE COMPRESSEUR

(30) Priorität: 23.12.2014 DE 102014226949
(43) Veröffentlichungstag der Anmeldung: 29.06.2016
(73) Patentinhaber: Siemens Aktiengesellschaft, 80333 München (DE)
(72) Erfinder: Geist, Richard, 91207 Lauf (DE)

(56) Entgegenhaltungen:
- EP-A1- 1 734 230
- DE-A1-102011 057 159
- US-A1- 2014 361 489

## Beschreibung

Die vorliegende Erfindung betrifft eine Dichtungsvorrichtung zur Abdichtung eines Turbinengehäuses an einem Rotor mit einer Schutzvorrichtung für wenigstens eine Bürstendichtung einer Verdichterantriebsturbine. Ferner betrifft die vorliegende Erfindung eine Verdichterantriebsturbine und eine Turbine.

Eine Kondensationsdampfturbine ist beispielsweise eine Niederdruckdampfturbine, bei der der Dampf bis in den Sattdampfzustand oder teilweise sogar bis ins Nassdampfgebiet hinein entspannt wird. Um einen maximalen Wirkungsgrad der Kondensationsdampfturbine zu erreichen, wird der Kondensationsdampfturbine ein Kondensator vorgeschaltet, so dass eine möglichst niedrige Dampf- bzw. Kondensationstemperatur und somit ein möglichst niedriger Gegendruck (Unterdruck) erzeugt wird. Um zu vermeiden, dass Dampf aus dem Turbinengehäuse in die Umgebung bzw. Luft aus der Umgebung in das Turbinengehäuse eintreten kann, weisen Dampfturbinen Wellendichtungen auf. Die Wellendichtungen sind zwischen dem Turbinengehäuse und dem Rotor der Turbine angeordnet. Überwiegend werden, wegen der hohen Relativgeschwindigkeiten, als Wellendichtungen berührungsfreie Labyrinthdichtungen verwendet. Labyrinthdichtungen gewährleisten eine gleichbleibend gute Dichtwirkung über lange Revisionsintervalle hinweg. Ein Einsatz von Bürstendichtungen in Turbinen mit erheblich längeren Wartungsintervallen, beispielsweise in Dampfturbinen, erfolgt bisher nur in geringem Umfang. Während der Montage und im Betrieb von Turbinen mit Bürstendichtungen, muss unter allen Umständen ein Rückwärtsdrehen des Rotors vermieden werden. Bei Verdichterantriebsturbinen kann es jedoch vorkommen, dass nach dem Abstellen durch den Verdichter kurze Zeit rückwärts gedreht wird. Dieses Rückwärtsdrehen führt unweigerlich zu einer Beschädigung der Bürstendichtung, da in der Regel die Bürstenhaare an dem Rotor anliegen. Deshalb ist bisher die Anwendung von Bürstendichtungen bei Verdichterantriebsturbinen nahezu ausgeschlossen.

Es ist daher die Aufgabe der vorliegenden Erfindung, die Einsatzmöglichkeit von Bürstendichtungen in Verdichterantriebsturbinen zu verbessern und damit den Wirkungsgrad einer Verdichterantriebsturbine zu erhöhen.

Die voranstehende Aufgabe wird gelöst durch eine Dichtungsvorrichtung zur Abdichtung eines Turbinengehäuses an einem Rotor einer Verdichterantriebsturbine mit den Merkmalen des Anspruchs 1 eine Verdichterantriebsturbine mit den Merkmalen gemäß Anspruch 9 sowie eine Turbine mit den Merkmalen gemäß Anspruch 12. Weitere Merkmale und Details der Erfindung ergeben sich aus den Unteransprüchen, der Beschreibung und den Zeichnungen. Dabei gelten Merkmale und Details, die im Zusammenhang mit der Schutzvorrichtung beschrieben worden sind selbstverständlich auch im Zusammenhang mit der Dichtungsvorrichtung, der Verdichterantriebsturbine sowie der Turbine und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine Dichtungsvorrichtung mit den Merkmalen des Anspruchs 1. Über das Federelement kann die Buchse gegenüber einem Turbinengehäuse einer Verdichterantriebsturbine oder gegenüber einer Labyrinthbuchse, die zwischen einem Turbinengehäuse und einem Rotor einer Verdichterantriebsturbine angeordnet ist, federnd abgestützt werden, so dass mittels der Schutzvorrichtung die wenigstens eine Bürstendichtung je nach Betrieb bzw. Nichtbetrieb der Verdichterantriebsturbine verschiedene Positionen einnehmen kann. D.h., die Schutzvorrichtung kann axial verschiebbar zwischen einem Turbinengehäuse und einem Rotor einer Verdichterantriebsturbine angeordnet werden, so dass je nach Druck innerhalb der Verdichterantriebsturbine aufgrund des Federelementes die Schutzvorrichtung und damit die wenigstens eine Bürstendichtung axial verschiedene Positionen einnehmen kann bezogen auf die Drehachse des Rotors. Die Verdichterantriebsturbine, insbesondere die Innenwandung des Turbinengehäuses oder die Mantelfläche des Rotors können derartig ausgestaltet werden, dass je nach Position der Schutzvorrichtung die in der Aufnahme der Schutzvorrichtung positionierbaren Bürstendichtungen mal abdichtend an der Innenwandung des Turbinengehäuses oder an der Mantelfläche des Rotors anliegen bzw. mal nicht abdichtend an der Innenwandung des Turbinengehäuses bzw. der Mantelfläche des Rotors anliegen. Mit anderen Worten ausgedrückt, können die in einer derartigen Schutzvorrichtung anbringbaren Bürstendichtungen in Zusammenspiel mit dem Durchmesser des Turbinengehäuses bzw. des Rotors je nach Betrieb der Verdichterantriebsturbine entweder abdichtend angeordnet werden oder vollständig von der Wandung des Turbinengehäuses bzw. der Mantelfläche des Rotors entfernt werden.

Ist die Verdichterantriebsturbine außer Betrieb, herrscht innerhalb des Turbinengehäuses ein geringer Druck. Aufgrund der Federkraft des Federelementes der Schutzvorrichtung wird die Buchse mit den Bürstendichtungen axial entlang der Drehachse des Rotors verschoben. In der dann erreichten Außerbetriebsstellung der Verdichterantriebsturbine sind die Lage der Schutzvorrichtung und damit der Bürstendichtungen und die Gestalt der Innenwandung des Turbinengehäuses bzw. der Mantelfläche des Rotors derart aufeinander abgestimmt, dass die Bürstendichtungen die Innenwandung des Turbinengehäuses bzw. die Mantelfläche des Rotors nicht berühren. D.h., während des Stillstands der Verdichterantriebsturbine, dem Turnbetrieb und beim Hoch- und Abfahren der Verdichterantriebsturbine kann die Schutzrichtung durch die Federkraft derart axial verschoben werden, dass die Bürsten der Bürstendichtung außer Eingriff gebracht werden. Beim Hochfahren und Belasten der Verdichterantriebsturbine steigt der Dampfdruck innerhalb der Verdichterantriebsturbine, beispielsweise in der Radkammer, vor der Schutzvorrichtung an und schiebt die axial beweglich positionierbare Schutzvorrichtung entgegen der Federkraft des Federelements in eine Betriebsstellung. In der Betriebsstellung laufen die Bürsten der Bürstendichtung an der Innenwandung des Turbinengehäuses bzw. an der Mantelfläche des Rotors entlang und übernehmen deshalb eine Dichtfunktion.

Durch eine derartig ausgebildete Schutzvorrichtung ist ein höherer Wirkungsgrad der Verdichterantriebsturbine erreichbar. Eine Beschädigung der Bürstendichtungen durch ein Rückwärtsdrehen des Rotors ist nicht mehr möglich, da die Bürsten in der Außerbetriebsstellung keinen Eingriff am Rotor bzw. am Turbinengehäuse haben.

Gemäß einer bevorzugten Weiterentwicklung der Erfindung kann bei einer Schutzvorrichtung vorgesehen sein, dass an der ersten Stirnseite wenigstens eine radial umlaufende Dichtung, insbesondere ein Dichtring, angeordnet ist. Durch diese radial umlaufende Dichtung kann eine zusätzliche Abdichtung gegenüber dem Turbinengehäuse oder gegenüber einer Labyrinthbuchse für eine Labyrinthdichtung erreicht werden, wenn die Verdichterantriebsturbine in Betrieb ist. D.h., aufgrund des beim Hochfahren der Verdichterantriebsturbine ansteigenden Drucks innerhalb des Turbinengehäuses, kann die axial verschiebbar lagerbare Schutzvorrichtung mit der radial umlaufenden Dichtung gegen die Innenwandung des Turbinengehäuses bzw. gegen die Labyrinthbuchse gedrückt werden, so dass diese eine zusätzliche Dichtungsfunktion übernimmt.

Das Federelement der Schutzvorrichtung bzw. die Schutzvorrichtung wird derart zwischen einem Turbinengehäuse und dem Rotor einer Verdichterantriebsturbine positioniert, dass dieses zwischen der Innenwandung des Turbinengehäuses bzw. einer Labyrinthbuchse und der Buchse der Schutzvorrichtung angeordnet ist. Durch die Abstützung des Federelementes gegenüber einem feststehenden Bauteil, kann dieses eine Federkraft auf die Buchse der Schutzvorrichtung ausüben, die die Buchse beim Wegfall einer bestimmten Druckkraft auf der anderen Seite der Buchse verschieben kann. Bevorzugt ist bei einer Schutzvorrichtung vorgesehen, dass das Federelement an dem Anschlagbereich und/oder der ersten Stirnseite der Buchse beweglich gehalten ist. So kann das erste Ende des Federelementes an dem Anschlagbereich der Buchse befestigt sein. Besonders bevorzugt ist an der ersten Stirnseite der Buchse eine Führung vorgesehen, in der das Federelement beweglich gehalten ist. Beispielsweise kann an der ersten Stirnseite der Buchse eine Sacklochbohrung vorgesehen sein, deren Boden den Anschlagbereich bildet, in der die Feder axial beweglich gehalten ist.

Prinzipiell kann das Federelement verschiedenartige Federformen einnehmen. Beispielsweise sind Biegefedern, wie Blattfedern oder Tellerfedern, oder Schraubenfedern denkbar. Besonders bevorzugt ist eine Schutzvorrichtung, bei er das Federelement eine Druckfeder ist. Eine derartige Druckfeder ermöglicht es, die Schutzvorrichtung aus einer Betriebsstellung aufgrund der in der Betriebsstellung herrschenden Federkraft des Federelementes in eine Außerbetriebsstellung zu bewegen, sobald der Druck auf der dem Federelement gegenüberliegenden Seite der Buchse geringer ist als die Federkraft des Federelementes.

Gemäß einer bevorzugten Weiterentwicklung der Erfindung kann bei einer Schutzvorrichtung vorgesehen sein, dass an der Außenmantelfläche der Buchse wenigstens eine radial umlaufende Nut mit einem in der Nut sitzenden Dichtelement vorgesehen ist. Hierdurch kann die Buchse der Schutzvorrichtung trotz ihrer axialen Verschiebbarkeit radial an der Innenwandung des Turbinengehäuses oder an einer Wandung einer benachbarten Labyrinthbuchse abdichtend angeordnet werden. Als Dichtelement kann beispielsweise ein Kolbenring eingesetzt werden. Bei einer Schutzvorrichtung kann zusätzlich vorgesehen sein, dass an der Außenmantelfläche der Buchse wenigstens ein radial umlaufendes Radiallager vorgesehen ist. Dies ermöglicht eine besonders einfache Verschiebbarkeit der Schutzvorrichtung innerhalb des Turbinengehäuses, insbesondere entlang einer Labyrinthbuchse, die zwischen dem Turbinengehäuse und dem Rotor angeordnet ist.

Die Dichtungsvorrichtung weist eine am Turbinengehäuse oder am Rotor fixierbare Labyrinthbuchse und zumindest eine Labyrinthdichtung an der Innenmantelfläche und/oder der Außenmantelfläche der Labyrinthbuchse auf. Ferner ist die Dichtungsvorrichtung dadurch gekennzeichnet, dass diese eine Schutzvorrichtung gemäß dem ersten Aspekt der Erfindung, insbesondere gemäß den Ansprüchen 1 bis 6, aufweist. Ebenso ist bei der Dichtungsvorrichtung vorgesehen, dass in jeder radial umlaufenden Aufnahme eine Bürstendichtung angeordnet ist, dass die Labyrinthbuchse zumindest teilweise axial neben der Buchse der Schutzvorrichtung angeordnet ist, dass die Labyrinthbuchse an einer der Buchse der Schutzvorrichtung zugeordneten Stirnseite einen Gegenanschlagbereich zum Anschlag eines zweiten Endes des Federelementes der Schutzvorrichtung aufweist, und dass die Schutzvorrichtung gegen die Federkraft des Federelementes axial verschiebbar an der Labyrinthbuchse gelagert ist. Eine derartig ausgebildete Dichtungsvorrichtung hat den Vorteil, dass auch minimale Labyrinthspalte bei Verdichterantriebsturbinen ermöglicht werden können, da vor der Labyrinthdichtung zusätzlich eine Bürstendichtung angeordnet ist. Hierdurch sind höhere Wirkungsgrade bei der Verdichterantriebsturbine möglich. Die Dichtungsvorrichtung ermöglicht, dass bei der Montage, dem Stillstand, dem Hochlaufen und dem Abfahren einer Verdichterantriebsturbine die Bürstendichtung bzw. die Bürsten der Bürstendichtung nicht mit dem Rotor oder ggf. mit dem Turbinengehäuse der Verdichterantriebsturbine in Kontakt stehen. Hierdurch ist auch eine Beschädigung der Bürstendichtung durch den Rücklauf bzw. durch ein Rückwärtsdrehen des Rotors der Verdichterantriebsturbine verhindert. Dadurch, dass die Schutzvorrichtung mit den darin angeordneten Bürstendichtungen verschiebbar an der Labyrinthbuchse gelagert ist, ist ein mögliches Schleifen der Bürstendichtung an dem Rotor oder an der Innenwandung des Turbinengehäuses ausgeschlossen, wenn die Verdichterantriebsturbine nicht in Betrieb ist.

Durch die Kombination der Labyrinthdichtung mit einer Bürstendichtung kann eine Verbesserung des Wirkungsgrades der Verdichterantriebsturbine erreicht werden. Die Bürstendichtung ist nicht mehr gegenüber Beschädigungen anfällig, da sie beim Hochfahren und Belasten der Verdichterantriebsturbine bzw. bei der Montage und im Stillstand der Verdichterantriebsturbine nicht in Eingriff mit der Mantelfläche des Rotors oder der Innenwandung des Turbinengehäuses steht. Eine derartige Dichtvorrichtung kann insbesondere als Stufendichtung bei Leit- und Laufbeschaufelungen im Hochdruckteil und als Dichtung an Ausgleichskolben zum Einsatz kommen.

Je nachdem, ob bei einer Verdichterantriebsturbine der Rotor feststeht und das Turbinengehäuse gedreht wird bzw. das Turbinengehäuse feststeht und der Rotor gedreht wird, kann die Labyrinthbuchse entweder an dem Turbinengehäuse oder dem Rotor befestigt werden. D.h., die zumindest eine Labyrinthdichtung wird an der Innenmantelfläche der Labyrinthbuchse angeordnet, wenn der Rotor der Verdichterantriebsturbine sich dreht. Dreht sich das Turbinengehäuse um den Rotor, so wird die Labyrinthdichtung an der Außenmantelfläche der Labyrinthbuchse angeordnet. Die Schutzvorrichtung weist zumindest eine Aufnahme auf, in der eine Bürstendichtung angeordnet ist. Vorzugsweise weist die Schutzvorrichtung eine Vielzahl von beabstandet zueinander angeordneten radial umlaufenden Aufnahmen auf, in denen jeweils eine Bürstendichtung angeordnet ist. Die Labyrinthbuchse ist zumindest teilweise axial neben der Buchse der Schutzvorrichtung angeordnet. D.h., vorzugsweise überlappen sich die Labyrinthbuchse und die Buchse der Schutzvorrichtung, so dass diese in dem überlappenden Bereich bewegbar zueinander gelagert sind. Zwischen der Labyrinthbuchse und der Buchse der Schutzvorrichtung ist das Federelement der Schutzvorrichtung angeordnet, so dass die Schutzvorrichtung gegen die Federkraft des Federelementes axial verschiebbar an der Labyrinthbuchse gelagert ist. Durch diese Lagerung der Schutzvorrichtung an der Labyrinthbuchse kann die Schutzvorrichtung zwischen der Betriebsstellung und der Außerbetriebsstellung hin und her verschoben werden. In der Betriebsstellung sind die Bürstendichtungen in Kontakt zu der Mantelfläche des Rotors bzw. zu der Innenwandung des Turbinengehäuses, währenddessen in der Außerbetriebsstellung die Bürstendichtungen keinen Kontakt zu dem Turbinengehäuse bzw. dem Rotor haben. D.h., bei der Montage der Verdichterantriebsturbine befindet sich die Schutzvorrichtung der Dichtungsvorrichtung in der Außerbetriebsstellung, in der die Bürstendichtungen nicht beschädigt werden können. Erst während des Hochfahrens der Verdichterantriebsturbine wird die Buchse der Schutzvorrichtung und damit die Bürstendichtungen gegen die Federkraft des Federelementes axial, d.h. parallel zur Drehachse des Rotors, in Richtung der Labyrinthbuchse verschoben, bis in der Betriebsstellung die Bürstendichtungen abdichtend an der Mantelfläche des Rotors bzw. der Innenwandung des Turbinengehäuses entlangschleifen.

Die Bewegung der Schutzvorrichtung von der Labyrinthbuchse weg ist vorzugsweise durch einen Anschlag an der Mantelfläche des Rotors oder an der Innenwandung des Turbinengehäuses begrenzt. Befindet sich die Buchse der Schutzvorrichtung an diesem Anschlag, so ist die Außerbetriebsstellung der Schutzvorrichtung erreicht. Zur Abdichtung der Buchse an der Labyrinthbuchse kann an der Außenmantelfläche der Buchse wenigstens eine radial umlaufende Nut mit einem in der Nut sitzenden Dichteelement vorgesehen sein. Alternativ oder zusätzlich kann bei einer Dichtungsvorrichtung vorgesehen sein, dass an einer Mantelfläche der Labyrinthbuchse wenigstens eine radial umlaufende Nut mit einem in der Nut sitzenden Dichtelement zum Abdichten der Labyrinthbuchse gegenüber der Buchse vorgesehen ist. Dieses wenigstens eine Dichtelement dichtet die Buchse der Schutzvorrichtung gegenüber der Labyrinthbuchse trotz der Verschiebbarkeit der Buchse der Schutzvorrichtung an der Labyrinthbuchse gegenüber dieser ab. Zusätzlich kann über wenigstens eine radial umlaufende Dichtung, insbesondere einen Dichtring, an der der Labyrinthbuchse zugewandten ersten Stirnseite der Buchse der Schutzvorrichtung eine Abdichtung in der Betriebsstellung gewährleistet werden.

Gemäß einer bevorzugten Weiterentwicklung der Erfindung kann bei einer Dichtungsvorrichtung vorgesehen sein, dass zur axialen Verschiebbarkeit der Buchse an der Labyrinthbuchse parallel zur Achse der Labyrinthbuchse wenigstens ein Führungselement und parallel zur Achse der Buchse wenigstens ein Gegenführungselement angeordnet sind. Diese gewährleisten, dass die Buchse verdrehsicher zur Labyrinthbuchse angeordnet ist. Gleichzeitig ist die Buchse der Schutzvorrichtung aber axial zur Achse der Labyrinthbuchse verschiebbar gehalten. Durch eine derartige Anordnung ist gewährleistet, dass das Federelement sicher zwischen der Labyrinthbuchse und der Buchse der Schutzvorrichtung gehalten ist und insbesondere keine radialen Kräfte auf das Federelement wirken können. Die Schutzvorrichtung kann ein umlaufendes Federelement, beispielsweise in Form einer Elastomer-Feder, aufweisen. Vorzugsweise sind eine Vielzahl von Spiralfedern umlaufend zwischen der Labyrinthbuchse und der Buchse der Schutzvorrichtung angeordnet.

Besonders vorteilhaft ist das wenigstens eine Federelement in einer Führungskulisse, beispielsweise einer Sacklochbohrung, in der Labyrinthbuchse und/oder der Buchse der Schutzvorrichtung angeordnet. Hierdurch wird sichergestellt, dass dies exakt ausgerichtet zwischen der Labyrinthbuchse und der Buchse angeordnet werden kann und die Federkraft vorzugsweise parallel zur Drehachse des Rotors von der Labyrinthbuchse auf die bewegbar gelagerte Schutzvorrichtung wirken kann.

Als Führungselement bzw. als Gegenführungselement an der Labyrinthbuchse bzw. der Buchse der Schutzvorrichtung können beispielsweise längliche Vorsprünge bzw. längliche Nuten dienen, die parallel zur Drehachse des Rotors verlaufen. Für die Dichtungsvorrichtung gemäß dem zweiten Aspekt der Erfindung gelten die gleichen Vorteile, wie sie bereits ausführlich zu dem ersten Aspekt der Erfindung, d.h. der Schutzvorrichtung, erläutert worden sind.

Gemäß einem zweiten Aspekt der Erfindung wird die Aufgabe durch eine Verdichterantriebsturbine mit den Merkmalen des Anspruchs 9 für eine Turbine, aufweisend ein Turbinengehäuse sowie einen um eine Drehachse innerhalb des Turbinengehäuses drehbar gelagerten Rotor, gelöst. Im Sinne der Erfindung wird es als gleichbedeutend angesehen, wenn der Rotor feststeht und das Turbinengehäuse um den Rotor drehbar gelagert angeordnet ist. Die Verdichterantriebsturbine ist dadurch gekennzeichnet, dass zur Abdichtung des Turbinengehäuses zum Rotor wenigstens eine Dichtungsvorrichtung gemäß dem ersten Aspekt der Erfindung, insbesondere gemäß einem der Ansprüche 1 bis 3 zwischen dem Turbinengehäuse und dem Rotor angeordnet ist. Ferner ist bei der Verdichterantriebsturbine vorgesehen, dass am Rotor und/oder an der Innenseite des Turbinengehäuses beabstandet zueinander radial umlaufende Laufflächen vorgesehen sind, die einen größeren Durchmesser aufweisen, als der Rotor benachbart zu den Laufflächen. Ferner ist die Verdichterantriebsturbine dadurch gekennzeichnet, dass die Bürstendichtungen im gleichen Abstand zueinander angeordnet sind, wie die radial umlaufenden Laufflächen zueinander, dass in einer Betriebsstellung der axial verschiebbaren Schutzvorrichtung je eine Bürstendichtung an einer der Laufflächen abdichtend anliegt und dass in einer Außerbetriebsstellung der axial verschiebbaren Schutzvorrichtung je eine Bürstendichtung neben der jeweiligen Lauffläche beabstandet zu dem Rotor angeordnet ist, wobei in der Betriebsstellung die Schutzvorrichtung gegen die Federkraft des Federelements verschoben ist und in der Außerbetriebsstellung die Schutzvorrichtung durch die Federkraft des Federelements verschoben ist.

Bei einer derartig ausgebildeten Verdichterantriebsturbine kann ein höherer Wirkungsgrad der Verdichterantriebsturbine erreicht werden als bei bekannten Verdichterantriebsturbinen, da zusätzlich zur Labyrinthdichtung wenigstens eine Bürstendichtung vorhanden ist. Aufgrund der zusätzlichen, wenigstens einen Bürstendichtung kann der Spalt zwischen der Labyrinthbuchse und dem Rotor bzw. dem Turbinengehäuse, je nachdem an welchem Bauteil die Labyrinthbuchse befestigt ist, sehr gering gehalten werden.

Die radial umlaufenden Laufflächen können je nach Bauart der Verdichterantriebsturbine an der Innenwandung des Turbinengehäuses oder an der Mantelfläche des Rotors vorgesehen sein. Sind die Laufflächen an der Innenwandung des Turbinengehäuses vorgesehen, so weisen diese Laufflächen einen geringeren Durchmesser auf, als das Turbinengehäuse benachbart zu diesen Laufflächen. Sind die Laufflächen an dem Rotor vorgesehen, so weisen diese einen größeren Durchmesser auf, als der Rotor benachbart zu diesen Laufflächen. Hierdurch ist sichergestellt, dass in der Betriebsstellung der Schutzvorrichtung, d.h. während des Betriebes der Verdichterantriebsturbine, die Bürstendichtungen an den Laufflächen abdichtend anliegen, währenddessen in der Außerbetriebsstellung, d.h. während des Stillstandes, der Montage bzw. des Herunterfahrens oder des Hochfahrens der Verdichterantriebsturbine, die Bürstendichtungen nicht in Kontakt zu dem Turbinengehäuse bzw. dem Rotor stehen.

Bevorzugt ist die Dichtungsvorrichtung zwischen zwei Regelstufen der Verdichterantriebsturbine oder vor der ersten Regelstufe der Verdichterantriebsturbine zwischen dem Turbinengehäuse und dem Rotor der Verdichterantriebsturbine angeordnet. Hierdurch ist strömungsabwärts bezogen auf ein Durchströmungsfluid der Verdichterantriebsturbine ein höherer Druck als strömungsaufwärts. Die Schutzvorrichtung bzw. das wenigstens eine Federelement der Schutzvorrichtung ist derart auf die Druckverhältnisse innerhalb der Verdichterantriebsturbine abgestellt, dass die Schutzvorrichtung bei Vorhandensein eines höheren Druckes auf der stromabwärts gelegenen Seite der Dichtungsvorrichtung gegen die Federkraft des wenigstens einen Federelementes in Richtung der feststehenden Labyrinthbuchse axial verschoben werden kann. Solange die Verdichterantriebsturbine in Betrieb ist, befindet sich die Schutzvorrichtung in der Betriebsstellung, in der die Buchse der Schutzvorrichtung gegen die Stirnseite der Labyrinthbuchse gepresst wird. Entspannt sich das Druckverhältnis innerhalb der Turbine, so bewirkt die Federkraft des wenigstens einen Federelementes, dass die Schutzvorrichtung und damit die Bürstendichtungen von der Labyrinthbuchse axial weggeschoben werden, so dass die Außerbetriebsstellung der Schutzvorrichtung erreicht wird, in der die Bürstendichtungen in keinem Kontakt zu einem Bauteil der Verdichterantriebsturbine stehen. Hierdurch können die Bürstendichtungen nicht zerstört werden, was diese wartungsunanfälliger macht bzw. die Lebensdauer der Bürstendichtungen deutlich erhöht.

Bei einer Verdichterantriebsturbine kann vorzugsweise vorgesehen sein, dass die Dichtungsvorrichtung derartig zwischen dem Turbinengehäuse und dem Rotor sitzt, dass die Schutzvorrichtung bezogen auf die Labyrinthbuchse auf der druckhöheren Seite innerhalb des Turbinengehäuses angeordnet ist.

Gemäß einer weiteren bevorzugten Weiterentwicklung der Erfindung kann bei einer Verdichterantriebsturbine vorgesehen sein, dass die Laufflächen geneigt zur Drehachse des Rotors verlaufen. D.h., sowohl die an dem Turbinengehäuse angeordneten Laufflächen, als auch Laufflächen, die an dem Rotor angeordnet sind, verlaufen vorzugsweise geneigt zur Drehachse des Rotors, die auch die Achse des Turbinengehäuses darstellt. Die Neigung der Laufflächen ist insbesondere derart ausgestaltet, dass der Durchmesser einer jeden Lauffläche von der Labyrinthbuchse aus zur Buchse der Schutzvorrichtung abnimmt. Hierdurch ist sichergestellt, dass bei einer axialen Verschiebung der Schutzvorrichtung aus der Außerbetriebsstellung in die Betriebsstellung die Bürstendichtungen zunehmend stärker in Kontakt zu den Laufflächen gelangen. Hierdurch sind diese weniger anfällig gegenüber einer Zerstörung, d.h., sie gleiten entlang den geneigt ausgebildeten Laufflächen, bis die Betriebsstellung erreicht ist, in der der Abstand zwischen der Lauffläche und einer Bürstendichtung am geringsten ist.

Für die Verdichterantriebsturbine gemäß dem zweiten Aspekt der Erfindung gelten die gleichen Vorteile, wie sie ausführlich zu der Schutzvorrichtung gemäß des ersten Aspekts der Erfindung bzw. der Dichtungsvorrichtung aus dem zweiten Aspekt der Erfindung erläutert worden sind.

Gemäß einem dritten Aspekt der Erfindung wird die durch eine Turbine, aufweisend eine Verdichterantriebsturbine gemäß dem zweiten Aspekt der Erfindung, insbesondere gemäß einem der Ansprüche 12 und 13 gelöst. Die Turbine kann eine Gasturbine sein. Bevorzugt ist die Turbine jedoch eine Dampfturbine. Die Dichtungsvorrichtungen werden vorzugsweise bei einer Verdichterantriebsturbine einer Dampfturbine als Stufendichtungen bei Leit- und Laufbeschaufelungen im Hochdruckteil und/oder als Dichtungen an Ausgleichskolben eingesetzt.

Erfindungsgemäße Schutzvorrichtungen sowie eine erfindungsgemäße Dichtungsvorrichtung sowie deren Weiterbildungen und Vorteile werden nachfolgend anhand von Zeichnungen näher erläutert. Es zeigen jeweils schematisch:
- Fig. 1: eine Verdichterantriebsturbine mit einer erfindungsgemäßen Dichtungsvorrichtung,
- Fig. 2: in einer Schnittdarstellung eine erste Schutzvorrichtung für wenigstens eine Bürstendichtung einer Verdichterantriebsturbine,
- Fig. 3: in einer Schnittdarstellung eine zweite Schutzvorrichtung für wenigstens eine Bürstendichtung einer Verdichterantriebsturbine,
- Fig. 4: in einer Schnittdarstellung eine dritte Schutzvorrichtung für wenigstens eine Bürstendichtung einer Verdichterantriebsturbine,
- Fig. 5: in einer Schnittdarstellung eine vierte Schutzvorrichtung für wenigstens eine Bürstendichtung einer Verdichterantriebsturbine,
- Fig. 6: in einer Schnittdarstellung eine Dichtungsvorrichtung in der Außerbetriebsstellung innerhalb einer Verdichterantriebsturbine,
- Fig. 7: die Dichtungsvorrichtung gemäß Fig. 6 in einer Betriebsstellung der Verdichterantriebsturbine, und
- Fig. 8: eine vergrößerte Darstellung des Kontaktbereichs zwischen der Labyrinthbuchse und der Schutzvorrichtung gemäß Fig. 6.

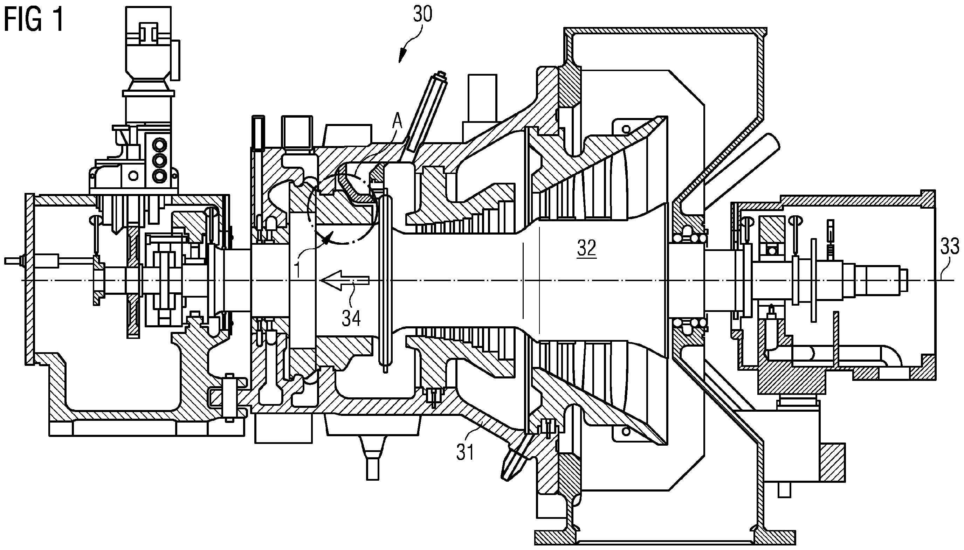

Elemente mit gleicher Funktion und Wirkungsweise sind in den Fig. 1 bis 8 jeweils mit den gleichen Bezugszeichen versehen.

Fig. 1 zeigt schematisch in einer Schnittdarstellung eine Verdichterantriebsturbine 30. Die Verdichterantriebsturbine 30 weist ein Turbinengehäuse 31 sowie einen Rotor 32 auf, der um eine Drehachse 33 drehbar gelagert ist. Die Durchströmungsrichtung 34 des Arbeitsfluids der Verdichterantriebsturbine 30 ist mit einem Pfeil gekennzeichnet. Mit Bezugszeichen A ist der Bereich gekennzeichnet, in dem eine erfindungsgemäße Dichtungsvorrichtung 20 zwischen dem Turbinengehäuse 31 und dem Rotor 32 der Verdichterantriebsturbine angeordnet ist.

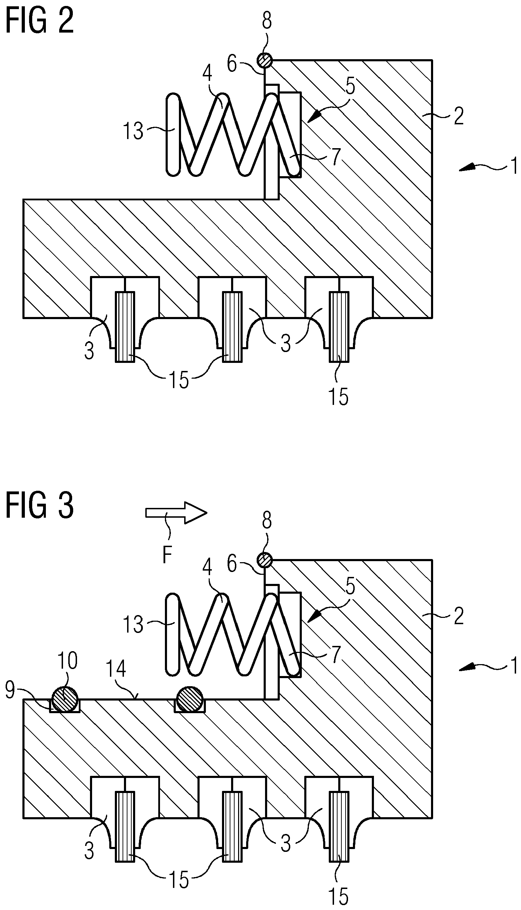

In den Fig. 2 bis 5 sind jeweils schematisch verschiedene Schutzvorrichtungen 1 für Bürstendichtungen 15 dargestellt, die zum Einsatz in einer Verdichterantriebsturbine 30 kommen können. Die Schutzvorrichtung 1 gemäß Fig. 2 weist eine Buchse 2 auf, die drei oder mehr beabstandet zueinander radial umlaufende Aufnahmen 3 für die Aufnahme jeweils einer Bürstendichtung 15 aufweist. Ferner weist die Schutzvorrichtung 1 ein Federelement 4 und einen Anschlagbereich 5 an einer ersten Stirnseite 6 der Buchse 2 zum Anschlag eines ersten Endes 7 des Federelementes 4 auf. Vorzugsweise ist das Federelement 4 mit seinem ersten Ende an der Buchse 2, insbesondere an dem Anschlagbereich 5 der Buchse 2, fixiert. Die Aufnahmen 3 sind an der Innenmantelfläche der Buchse 2 angeordnet, die der Mantelfläche eines Rotors 32 einer Verdichterantriebsturbine 30 zugewandt sind. In jeder der radial umlaufenden Aufnahmen 3 kann eine Bürstendichtung 15 befestigt werden. An der ersten Stirnseite 6 der Buchse 2 ist eine radial umlaufende Dichtung 8, die insbesondere in Form eines Dichtrings ausgebildet sein kann, angeordnet. Diese Dichtung 8 dient zur Abdichtung der Buchse 2 der Schutzvorrichtung 1 an der Innenwand eines Turbinengehäuses 31 einer Verdichterantriebsturbine 30 oder zur Abdichtung an einer Labyrinthbuchse 21, die zwischen einem Turbinengehäuse 31 und einem Rotor 32 einer Verdichterantriebsturbine 30 angeordnet ist. Die Schutzvorrichtung 1 kann verschiebbar zum Rotor 32 oder zum Turbinengehäuse 31 einer Verdichterantriebsturbine 30 angeordnet werden. Über das Federelement 4 kann die Buchse 2 der Schutzvorrichtung 1 an der Innenwandung des Turbinengehäuses 31 einer Verdichterantriebsturbine 30 oder an einer Stirnseite 26 einer Labyrinthbuchse 21 abgestützt werden. D.h., das Federelement 4 dient dazu, aufgrund seiner Federkraft F, die Schutzvorrichtung aus einer Betriebsstellung BE in eine Außerbetriebsstellung AU zu überführen, wenn die Verdichterantriebsturbine außer Betrieb genommen wird. Das Federelement 4 ist dabei derart auf die Druckverhältnisse innerhalb der Verdichterantriebsturbine 30 abgestimmt, dass beim Abfahren der Verdichterantriebsturbine 30 die Federkraft F größer ist als die Druckkraft, die auf der gegenüberliegenden Stirnseite der Buchse 2 der Schutzvorrichtung 1 ist. Hierdurch ist gewährleistet, dass beim Abfahren der Verdichterantriebsturbine 30 die Schutzvorrichtung 1 axial von einer Labyrinthbuchse 21 entfernt werden kann.

Fig. 3 zeigt schematisch in einer Schnittdarstellung die Schutzvorrichtung 1 gemäß der Fig. 2. Zusätzlich sind bei dieser Schutzvorrichtung 1 im Vergleich der Schutzvorrichtung 1 gemäß der Fig. 2 an der Außenmantelfläche 14 der Buchse 2 zwei radial umlaufende Nuten 9 mit jeweils einem in der Nut 9 sitzenden Dichtelement 10 vorgesehen. Diese Dichtelemente 10 können beispielsweise Kolbenringe sein. Durch diese Dichtelemente erfolgt eine zusätzliche Abdichtung der Buchse 2 der Schutzvorrichtung gegenüber einer überlappend angeordneten Labyrinthbuchse 21. Die Dichtelemente 10 sind dabei einer axialen Verschiebung der Schutzvorrichtung 1 bzw. der Buchse 2 der Schutzvorrichtung 1 entlang einer Innenmantelfläche der Labyrinthbuchse 21 nicht hinderlich.

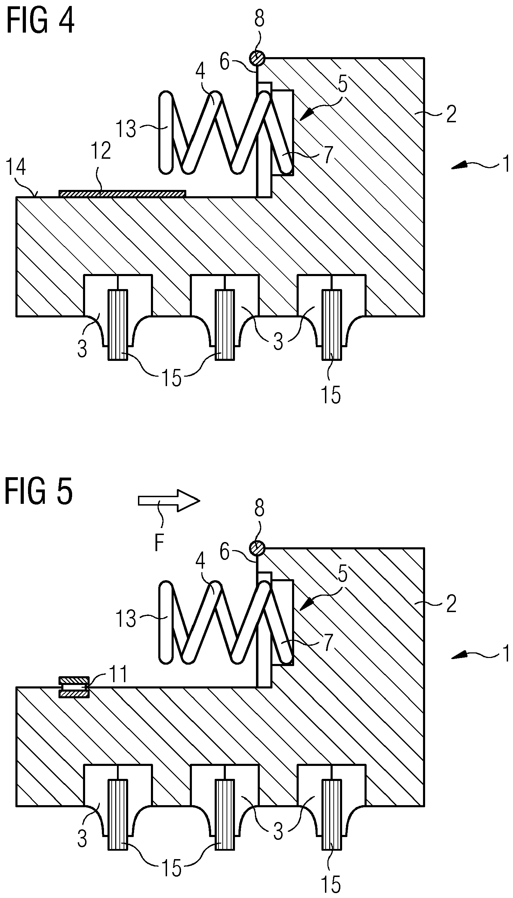

Die schematisch dargestellte Schutzvorrichtung 1 gemäß der Fig. 4 weist im Vergleich zu der Schutzvorrichtung 1 gemäß der Fig. 2 zusätzlich ein Gegenführungselement 12 auf, welches an der Außenmantelfläche 14 der Buchse 2 angeordnet ist. Das Gegenführungselement 12 ist vorzugsweise ein länglich ausgebildeter Vorsprung, der parallel zu der Achse 33 der Buchse 2, die der Drehachse 33 eines Rotors 32 entspricht, angeordnet. Das Gegenführungselement 12 dient als radiale Fixierung der Schutzvorrichtung an einer Labyrinthbuchse 21 und stellt dadurch die Verdrehsicherheit zu der Labyrinthbuchse 21 her.

In Fig. 5 ist ebenfalls schematisch in einer Schnittdarstellung eine Schutzvorrichtung 1 dargestellt. Im Vergleich zu der Schutzvorrichtung 1 gemäß der Fig. 2 weist die Schutzvorrichtung 1 gemäß der Fig. 5 ein radial umlaufendes Radiallager 11 auf, über welches die Buchse 2 der Schutzvorrichtung 1 radial verschiebbar an einer Labyrinthbuchse 21 gehalten werden kann. Vorzugsweise sind zwei oder mehr radial umlaufende Axiallager 11 zwischen der Buchse 2 und der Labyrinthbuchse 21 vorgesehen. Zusätzlich sind in Fig. 5 Bürstendichtungen 15 dargestellt, die in den jeweiligen Aufnahmen 3 der Buchse 2 der Schutzvorrichtung 1 angeordnet sind.

Die Bürstendichtungen 15 dienen dazu, in der Betriebsstellung BE der Schutzvorrichtung 1 in abdichtenden Kontakt zu einem Rotor 32 einer Verdichterantriebsturbine 30 zu gelangen.

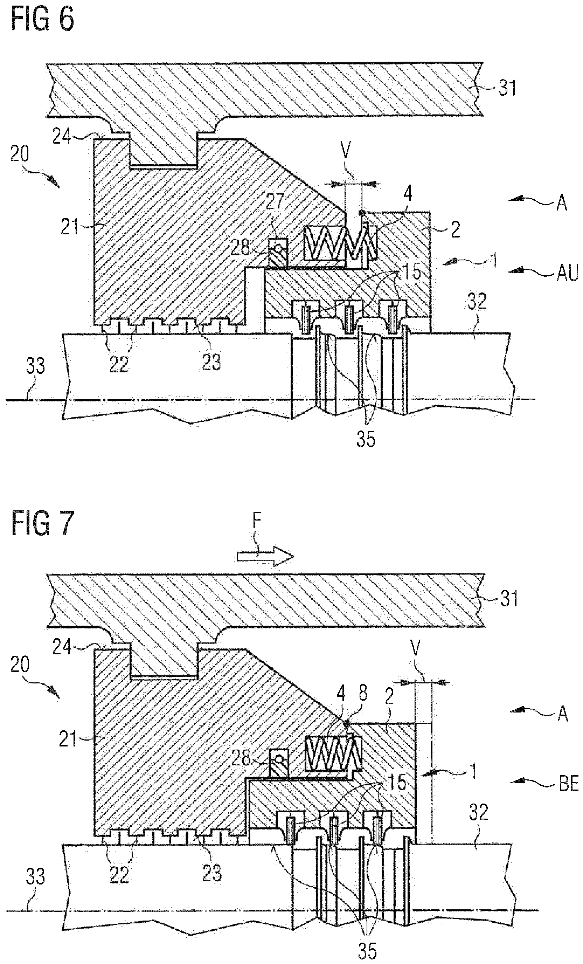

In den Fig. 6 und 7 ist eine Dichtungsvorrichtung 20 schematisch dargestellt, die zur Abdichtung eines Turbinengehäuses 31 an einem Rotor 32 einer Verdichterantriebsturbine 30 dient. Die Dichtungsvorrichtung 20 weist eine am Turbinengehäuse 31 fixierbare Labyrinthbuchse 21 auf. Ferner sind zur Abdichtung der Labyrinthbuchse 21 an der Innenmantelfläche 23 der Labyrinthbuchse 21 eine Vielzahl von Labyrinthdichtungen 22 angeordnet. Die Labyrinthbuchse 21 kann kraftschlüssig an dem Turbinengehäuse 31 der Verdichterantriebsturbine 30 angeordnet sein. Die Dichtungsvorrichtung 20 weist ferner eine Schutzvorrichtung 1 gemäß der Fig. 2 auf. An jeder radial umlaufenden Aufnahme 3 der Buchse 2 der Schutzvorrichtung 1 ist eine Bürstendichtung 15 angeordnet. Die Labyrinthbuchse 21 ist benachbart zur Buchse 2 der Schutzvorrichtung 1 angeordnet, wobei ein Teil der Labyrinthbuchse 21 die Buchse 2 überlappt. Die Labyrinthbuchse 21 weist an einer der Buchse 2 zugewandten Stirnseite 26 einen Gegenanschlagbereich 19 zum Anschlag eines zweiten Endes 13 des Federelementes 4 auf. Die Schutzvorrichtung 1 ist axial verschiebbar an der Labyrinthbuchse 21 gelagert.

In Fig. 6 befindet sich die Schutzvorrichtung 1 in der sogenannten Außerbetriebsstellung AU. Diese Außerbetriebsstellung AU nimmt die Schutzvorrichtung 1 dann an, wenn die Verdichterantriebsturbine 30 montiert wird, sich im Stillstand befindet bzw. zum Ende des Abfahrens der Verdichterantriebsturbine 30. Zwischen der ersten Stirnseite 6 der Buchse 2 und der Stirnseite 26 der Labyrinthbuchse 21 ist ein Spalt entstanden, der durch den Verschiebeweg V gekennzeichnet ist. In der Außerbetriebsstellung AU sorgt die Federkraft F des Federelements 4 für die Verschiebung der Schutzvorrichtung 1 in die Außerbetriebsstellung AU bzw. den Halt der Schutzvorrichtung 1 in der Außerbetriebsstellung AU. An dem Rotor 32 sind beabstandet zueinander radial umlaufende Laufflächen 35 für die Bürstendichtungen 15 vorgesehen, die einen größeren Durchmesser aufweisen, als der Rotor 32 benachbart zu den Laufflächen 35. Die in Aufnahmen 3 der Buchse 2 der Schutzvorrichtung 1 befestigten Bürstendichtungen 15 sind in der Außerbetriebsstellung AU nicht in Kontakt zu den Laufflächen 35, sondern befinden sich beabstandet zu den Teilen des Rotors, die einen geringeren Durchmesser aufweisen.

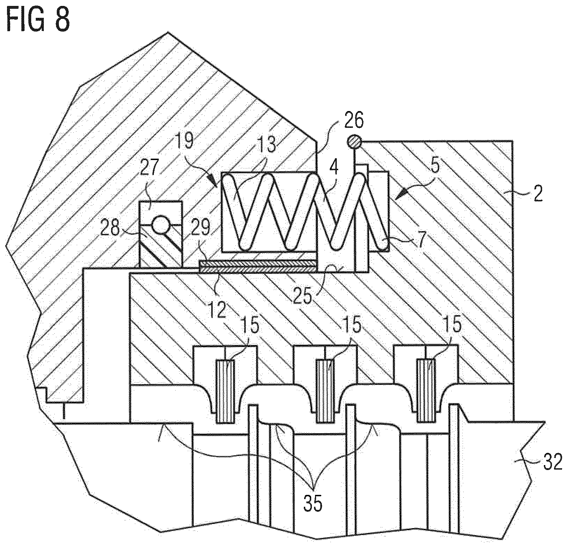

Fig. 7 zeigt die Dichtungsvorrichtung 20 gemäß der Fig. 6 in der Betriebsstellung BE der Schutzvorrichtung 1. Aufgrund des Betriebs der Verdichterantriebsturbine 30 herrscht auf der dem Federelement 4 abgewandten Seite der Buchse 2 ein höherer Druck, der die Schutzvorrichtung 1 in Richtung der Labyrinthbuchse 21 schiebt, entgegen der Federkraft F des Federelementes 4. Die Schutzvorrichtung 1 wird solange in Richtung der Labyrinthbuchse 21 axial verschoben, bis die erste Stirnseite 6, siehe Fig. 8, der Buchse 2 an der der Buchse 2 zugewandten Stirnseite 26 der Labyrinthbuchse 21 anschlägt. In dieser Betriebsstellung BE dichtet sowohl das Dichtelement 28 der Labyrinthbuchse 21 als auch die Dichtung 8 an der ersten Stirnseite 6 der Buchse 2 die beiden Bauteile gegeneinander ab. Das Federelement 4 ist in dieser Betriebsstellung BE komprimiert. Die Bürstendichtungen 15 sind auf die Laufflächen 35 des Rotors 32 aufgeschoben worden und bilden dadurch ihre Dichtfunktion gegenüber dem Rotor 32. Die Schutzvorrichtung 1 ist um den Verschiebeweg V in Richtung der Labyrinthbuchse 21 verschoben worden.

Eine derartig ausgebildete Dichtungsvorrichtung 20 ermöglicht, dass die Labyrinthdichtung 21 mit einem sehr geringen Spalt zu dem Rotor 32 angeordnet werden kann. Durch die beiden verschiedenen Dichtungsarten, d.h. die Bürstendichtung 15 und die Labyrinthdichtung 22 kann eine sehr gute Abdichtung des Turbinengehäuses 31 zu dem Rotor 32 bei der Verdichterantriebsturbine 30 erreicht werden. Entsprechend kann ein hoher Wirkungsgrad der Verdichterantriebsturbine erlangt werden.

## Patentansprüche

1. Dichtungsvorrichtung (20) zur Abdichtung eines Turbinengehäuses (31) an einem Rotor (32) einer Verdichterantriebsturbine (30), aufweisend eine am Turbinengehäuse (31) oder am Rotor (32) fixierbare Labyrinthbuchse (21) mit zumindest einer Labyrinthdichtung (22),
**dadurch gekennzeichnet, dass**
die Dichtungsvorrichtung (20) eine Schutzvorrichtung (1) mit wenigstens einer Bürstendichtung (15) für die Verdichterantriebsturbine (30), aufweisend eine Buchse (2), mit einer Innenmantelfläche und einer Außenmantelfläche (14), wobei die Buchse (2) an der Innenmantelfläche zumindest eine radial umlaufende Aufnahme (3) für die wenigstens eine Bürstendichtung (15) aufweist, ein Federelement (4) und einen Anschlagbereich (5) an einer ersten Stirnseite (6) der Buchse (2) zum Anschlag eines ersten Endes (7) des Federelements (4), aufweist, dass in jeder radial umlaufenden Aufnahme (3) eine Bürstendichtung (15) angeordnet ist, dass die Labyrinthbuchse (21) zumindest teilweise axial neben der Buchse (2) der Schutzvorrichtung (1) angeordnet ist, dass die Labyrinthbuchse (21) an einer der Buchse (2) der Schutzvorrichtung (1) zugewandten Stirnseite (26) einen Gegenanschlagbereich (19) zum Anschlag eines zweiten Endes (13) des Federelements (4) aufweist, und dass die Schutzvorrichtung (1) gegen die Federkraft (F) des Federelementes (4) axial verschiebbar an der Labyrinthbuchse (21) gelagert ist.

2. Dichtungsvorrichtung (20) gemäß Anspruch 1,
**dadurch gekennzeichnet, dass**
an einer Mantelfläche (25) der Labyrinthbuchse (21) wenigstens eine radial umlaufende Nut (27) mit einem in der Nut (27) sitzenden Dichtelement (28) zum Abdichten der Labyrinthbuchse (21) gegenüber der Buchse (2) vorgesehen ist.

3. Dichtungsvorrichtung (20) gemäß einem der vorangegangenen Ansprüche 1 oder 2,
**dadurch gekennzeichnet, dass**
zur axialen Verschiebbarkeit der Buchse (2) an der Labyrinthbuchse (21) parallel zur Achse (33) der Labyrinthbuchse (21) wenigstens ein Führungselement (29) und parallel zur Achse (33) der Buchse (2) wenigstens ein Gegenführungselement (12) angeordnet sind.

4. Dichtungsvorrichtung (20) gemäß einem der vorangegangenen Ansprüche,
**dadurch gekennzeichnet, dass**
an der ersten Stirnseite (6) wenigstens eine radial umlaufende Dichtung (8), insbesondere ein Dichtring, angeordnet ist.

5. Dichtungsvorrichtung (20)gemäß einem der vorangegangenen Ansprüche,
**dadurch gekennzeichnet, dass**
das Federelement (4) an dem Anschlagbereich (5) und/oder der ersten Stirnseite (6) der Buchse (2) beweglich gehalten ist.

6. Dichtungsvorrichtung (20)gemäß einem der vorangegangenen Ansprüche,
**dadurch gekennzeichnet, dass**
das Federelement (4) eine Druckfeder ist.

7. Dichtungsvorrichtung (20)gemäß einem der Ansprüche 1, 2 und 4 bis 6,
**dadurch gekennzeichnet, dass**
an der Außenmantelfläche (14) der Buchse (2) wenigstens eine radial umlaufende Nut (9) mit einem in der Nut (9) sitzenden Dichtelement (10) vorgesehen ist.

8. Dichtungsvorrichtung (20)gemäß einem der Ansprüche 1 bis 6,
**dadurch gekennzeichnet, dass**
an der Außenmantelfläche (14) der Buchse (2) wenigstens ein radial umlaufendes Radiallager (11) vorgesehen ist.

9. Verdichterantriebsturbine (30), aufweisend ein Turbinengehäuse (31) sowie einen um eine Drehachse (33) innerhalb des Turbinengehäuses (31) drehbar gelagerten Rotor (32),
**dadurch gekennzeichnet, dass**
zur Abdichtung des Turbinengehäuses (31) zum Rotor (32) wenigstens eine Dichtungsvorrichtung (20) gemäß einem der vor-angegangenen Ansprüche zwischen dem Turbinengehäuse (31) und dem Rotor (32) angeordnet ist, dass am Rotor (32) und/oder an der Innenseite des Turbinengehäuses (31) beabstandet zueinander radial umlaufende Laufflächen (35) vorgesehen sind, die einen größeren Durchmesser aufweisen, als der Rotor (32) benachbart zu den Laufflächen (35), die einen kleiner Durchmesser aufweisen, als das Turbinengehäuse (31) benachbart zu den Laufflächen (35) beziehungsweise, dass die Bürstendichtungen (25) im gleichen Abstand zueinander angeordnet sind, wie die radial umlaufenden Laufflächen (35) zueinander, dass in einer Betriebsstellung (BE) der axial verschiebbaren Schutzvorrichtung (1) je eine Bürstendichtung (15) an einer der Laufflächen (35) abdichtend anliegt und dass in einer Außerbetriebsstellung (AU) der axial verschiebbaren Schutzvorrichtung (1) je eine Bürstendichtung (15) neben der jeweiligen Laufflächen (35) beanstandet zu dem Rotor (32) angeordnet ist, wobei in der Betriebsstellung (BE) die Schutzvorrichtung (1) gegen die Federkraft (F) des Federelements (4) verschoben ist und in der Außerbetriebsstellung (AU) die Schutzvorrichtung (1) durch die Federkraft (F) des Federelements (4) verschoben ist.

10. Verdichterantriebsturbine (1) gemäß Anspruch 9,
**dadurch gekennzeichnet, dass**
die Dichtungsvorrichtung (20) derartig zwischen dem Turbinengehäuse (31) und dem Rotor (32) sitzt, dass die Schutzvorrichtung (1) bezogen auf die Labyrinthbuchse (21) auf der druckhöheren Seite innerhalb des Turbinengehäuses (31) angeordnet ist.

11. Verdichterantriebsturbine (1) gemäß Anspruch 9 oder 10,
**dadurch gekennzeichnet, dass**
die Laufflächen (35) geneigt zur Drehachse (33) des Rotors (32) verlaufen.

12. Turbine, aufweisend eine Verdichterantriebsturbine (30) gemäß einem der Ansprüche 9 bis 11.

13. Turbine gemäß Anspruch 12,
**dadurch gekennzeichnet, dass**
diese eine Dampfturbine ist.

## Claims

1. Sealing device (20) for sealing a turbine housing (31) on a rotor (32) of a compressor drive turbine (30), having a labyrinth bush (21) with at least one labyrinth seal (22) that can be fixed to the turbine housing (31) or to the rotor (32),
**characterized in that**
the sealing device (20) has a protective device (1) having at least one brush seal (15) for the compressor drive turbine (30), having a bush (2) with an inner circumferential surface and an outer circumferential surface (14), wherein the bush (2) has on the inner circumferential surface at least one radially circumferential receptacle (3) for the at least one brush seal (15), a spring element (4) and a stop region (5) on a first front side (6) of the bush (2) for the abutment of a first end (7) of the spring element (4), **in that** a brush seal (15) is arranged in each radially circumferential receptacle (3), **in that** the labyrinth bush (21) is arranged at least partially axially beside the bush (2) of the protective device (1), **in that** the labyrinth seal (21) has, on a front face (26) of the bush (2) facing the protective device (1), a mating stop region (19) for the abutment of a second end (13) of the spring element (4), and **in that** the protective device (1) is axially displaceability supported on the labyrinth bush (21) counter to the spring force (F) of the spring element (4).

2. Sealing device (20) according to Claim 1,
**characterized in that**
at least one radially circumferential groove (27) with a sealing element (28) seated in the groove (27) to seal off the labyrinth bush (21) relative to the bush (2) is provided on a circumferential surface (25) of the labyrinth bush (21).

3. Sealing device (20) according to either of the preceding Claims 1 and 2,
**characterized in that**
for the axial displaceability of the bush (2) on the labyrinth bush (21), at least one guide element (29) is arranged parallel to the axis (33) of the labyrinth bush (21), and at least one mating guide element (12) is arranged parallel to the axis (33) of the bush (2).

4. Sealing device (20) according to one of the preceding claims,
**characterized in that**
at least one radially circumferential seal (8), in particular a sealing ring, is arranged on the first front face (6).

5. Sealing device (20) according to one of the preceding claims,
**characterized in that**
the spring element (4) is held movably on the stop region (5) and/or the first front face (6) of the bush (2).

6. Sealing device (20) according to one of the preceding claims,
**characterized in that**
the spring element (4) is a compression spring.

7. Sealing device (20) according to one of Claims 1, 2 and 4 to 6,
**characterized in that**
at least one radially circumferential groove (9) with a sealing element (10) seated in the groove (9) is provided on the outer circumferential surface (14) of the bush (2).

8. Sealing device (20) according to one of Claims 1 to 6,
**characterized in that**
at least one radially circumferential radial bearing (11) is provided on the outer circumferential surface (14) of the bush (2) .

9. Compressor drive turbine (30), having a turbine housing (31) and a rotor (32) rotatably mounted about an axis of rotation (33) within the turbine housing (31),
**characterized in that**
to seal off the turbine housing (31) relative to the rotor (32), at least one sealing device (20) according to one of the preceding claims is arranged between the turbine housing (31) and the rotor (32), **in that** radially circumferential running surfaces (35) spaced apart from one another are provided on the rotor (32) and/or on the inner side of the turbine housing (31), which have a greater diameter than the rotor (32) adjacent to the running surfaces (35), which have a smaller diameter than the turbine housing (31) adjacent to the running surfaces (35), respectively, **in that** the brush seals (25) are arranged at the same distance from one another as the radially circumferential running surfaces (35), **in that** in an operating position (BE) of the axially displaceable protective device (1), in each case one brush seal (15) rests in a sealing manner on one of the running surfaces (35), and **in that** in a non-operational position (AU) of the axially displaceable protective device (1), in each case one brush seal (15) is arranged beside the respective running surfaces (35) at a distance from the rotor (32), wherein, in the operating position (BE), the protective device (1) is displaced counter to the spring force (F) of the spring element (4), and in the non-operational position (AU), the protective device (1) is displaced by the spring force (F) of the spring element (4).

10. Compressor drive turbine (1) according to Claim 9e,
**characterized in that**
the sealing device (20) is seated between the turbine housing (31) and the rotor (32) in such a way that the protective device (1) is arranged relative to the labyrinth bush (21) on the higher-pressure side within the turbine housing (31).

11. Compressor drive turbine (1) according to Claim 9 or 10,
**characterized in that**
the running surfaces (35) extend at an angle to the axis of rotation (33) of the rotor (32).

12. Turbine, having a compressor drive turbine (30) according to one of Claims 9 to 11.

13. Turbine according to Claim 12,
**characterized in that**
this is a steam turbine.

## Revendications

1. Dispositif (20) faisant office de joint d'étanchéité pour l'étanchéisation d'un carter de turbine (31) contre un rotor (32) d'une turbine d'entraînement de compresseur (30), présentant une douille à labyrinthe (21) qui peut venir se fixer contre le carter de turbine (31) ou contre le rotor (32), comprenant au moins un joint d'étanchéité à labyrinthe (22), **caractérisé en ce que** le dispositif (20) faisant office de joint d'étanchéité présente un dispositif de protection (1) comprenant au moins un joint d'étanchéité à balais (15) pour la turbine d'entraînement de compresseur (30), présentant une douille (2) comprenant une surface latérale intérieure et une surface latérale extérieure (14) ; dans lequel la douille (2) présente, contre la surface latérale intérieure, au moins un logement (3) s'étendant à la périphérie en direction radiale pour ledit au moins un joint d'étanchéité à balais (15), un élément faisant office de ressort (4) et une zone de butée (5) contre un premier côté avant (6) de la douille (2) pour que vienne y buter une première extrémité (7) de l'élément faisant office de ressort (4) ; **en ce que**, dans chaque logement (3) s'étendant à la périphérie en direction radiale, est disposé un joint d'étanchéité à balais (15) ; **en ce que** la douille à labyrinthe (21) est disposée au moins en partie en position axiale à côté de la douille (2) du dispositif de protection (1) ; **en ce que** la douille à labyrinthe (21) présente, contre un côté avant (26) tourné vers la douille (2) du dispositif de protection (1), une zone de contre-butée (19) pour que vienne y buter une seconde extrémité (13) de l'élément faisant office de ressort (4) ; et **en ce que** le dispositif de protection (1) est monté contre la douille à labyrinthe (21) de manière à pouvoir se déplacer en direction axiale à l'encontre de la force de ressort (F) de l'élément faisant office de ressort (4) .

2. Dispositif (20) faisant office de joint d'étanchéité selon la revendication 1, **caractérisé en ce qu'**on prévoit, contre une surface latérale (25) de la douille à labyrinthe (21), au moins une rainure (27) s'étendant à la périphérie en direction radiale comprenant un élément d'étanchéité (28) logé dans la rainure (27) pour l'étanchéisation de la douille à labyrinthe (21) par rapport à la douille (2).

3. Dispositif (20) faisant office de joint d'étanchéité selon l'une quelconque des revendications précédentes 1 ou 2, **caractérisé en ce que**, pour la mobilité axiale de la douille (2) contre la douille à labyrinthe (21) parallèlement à l'axe (33) de la douille à labyrinthe (21), sont disposés au moins un élément de guidage (29) et, parallèlement à l'axe (33) de la douille (2), au moins un élément de guidage antagoniste (12) .

4. Dispositif (20) faisant office de joint d'étanchéité selon l'une quelconque des revendications précédentes, **caractérisé en ce que**, contre le premier côté avant (6), est disposé au moins un joint d'étanchéité (8) s'étendant à la périphérie en direction radiale, en particulier une bague d'étanchéité.

5. Dispositif (20) faisant office de joint d'étanchéité selon l'une quelconque des revendications précédentes, **caractérisé en ce que** l'élément faisant office de ressort (4) est maintenu en mobilité contre la zone de butée (5) et/ou contre le premier côté avant (6) de la douille (2).

6. Dispositif (20) faisant office de joint d'étanchéité selon l'une quelconque des revendications précédentes, **caractérisé en ce que** l'élément faisant office de ressort (4) est un ressort de compression.

7. Dispositif (20) faisant office de joint d'étanchéité selon l'une quelconque des revendications 1, 2 et 4 à 6, **caractérisé en ce qu'**on prévoit, contre la surface latérale extérieure (14) de la douille (2), au moins une rainure (9) s'étendant à la périphérie en direction radiale comprenant un élément d'étanchéité (10) logé dans la rainure (9).

8. Dispositif (20) faisant office de joint d'étanchéité selon l'une quelconque des revendications 1 à 6, **caractérisé en ce qu'**on prévoit contre la surface latérale extérieure (14) de la douille (2), au moins un palier radial (11) s'étendant à la périphérie en direction radiale.

9. Turbine d'entraînement de compresseur (30) présentant un carter de turbine (31) ainsi qu'un rotor (32) monté en rotation autour d'un axe de rotation (33) au sein du carter de turbine (31), **caractérisée en ce que**, pour l'étanchéisation du carter de turbine (31) par rapport au rotor (32), au moins un dispositif (20) faisant office de joint d'étanchéité selon l'une quelconque des revendications précédentes est disposé entre le carter de turbine (31) et le rotor (32) ; **en ce qu'**on prévoit, contre le rotor (32) et/ou contre le côté interne du carter de turbine (31), des surfaces de roulement (35) écartées l'une de l'autre s'étendant à la périphérie en direction radiale qui présentent un diamètre supérieur à celui du rotor (32) adjacent aux surfaces de roulement (35), qui présentent un diamètre inférieur à celui du carter de turbine (31) adjacent aux surfaces de roulement (35), respectivement ; **en ce que** les joints d'étanchéité à balais (25) sont disposés à égale distance l'un de l'autre au même titre que les surfaces de roulement (35) l'une par rapport à l'autre s'étendant à la périphérie en direction radiale ; **en ce que**, dans une position de mise en service (BE) du dispositif de protection (1) apte à se déplacer en direction axiale, respectivement un joint d'étanchéité à balais (15) vient se disposer en étanchéité contre une des surfaces de roulement (35) ; et **en ce que**, dans une position de hors service (AU), du dispositif de protection (1) apte à se déplacer en direction axiale, respectivement un joint d'étanchéité à balais (15) est disposé respectivement à côté des surfaces de roulement respectives (35) à l'écart du rotor (32) ; dans lequel, dans la position de mise en service (BE), le dispositif de protection (1) est soumis à un déplacement à l'encontre de la force de ressort (F) de l'élément faisant office de ressort (4) et, dans la position de hors service (AU), le dispositif de protection (1) est soumis à un déplacement sous l'influence de la force de ressort (F) de l'élément faisant office de ressort (4).

10. Turbine d'entraînement de compresseur (1) selon la revendication 9, **caractérisée en ce que** le dispositif (20) faisant office de joint d'étanchéité est situé entre le carter de turbine (31) et le rotor (32) d'une manière telle que le dispositif de protection (1) est disposé à l'intérieur du carter de turbine (31) sur le côté soumis à une pression supérieure, par rapport à la douille à labyrinthe (21).

11. Turbine d'entraînement de compresseur (1) selon la revendication 9 ou 10, **caractérisée en ce que** les surfaces de roulement (35) s'étendent en inclinaison par rapport à l'axe de rotation (33) du rotor (32).

12. Turbine présentant une turbine d'entraînement de compresseur (30) selon l'une quelconque des revendications 9 à 11.

13. Turbine selon la revendication 12, **caractérisée en ce qu'**il s'agit d'une turbine à vapeur.
